# EUROPEAN PATENT APPLICATION

(11) **EP 4 578 715 A1**
(43) Date of publication of application: **02.07.2025**
(21) Application number: 23931058.4
(22) Date of filing: 05.12.2023
(51) Int. Cl.: B60L 53/18, B60L 53/16, B60L 53/35, B60L 53/10, H02G 11/00, F16F 9/02

(54) **CHARGER**

(30) Priority: 27.03.2023 KR 20230039937
(71) Applicant: LG Electronics Inc., Yeongdeungpo-gu Seoul 07336 (KR)
(72) Inventor: SHIN, Jongyeon, Seoul 06772 (KR); KIM, Jintae, Seoul 06772 (KR); LIM, Peelhyuk, Seoul 06772 (KR)
(74) Representative: Vossius & Partner Patentanwälte Rechtsanwälte mbB
(86) International application number: PCT/KR2023/019924
(87) International publication number: WO 2024/204950

(57) **Abstract**

Abstract: A charger according to the present embodiment may comprise a cover having a space formed in the cover; a first pulley guide and a second pulley guide disposed in the cover; a first moving pulley guided by the first pulley guide and moved by a charging cable; a second moving pulley guided by the second pulley guide and moved by the charging cable; and a damper installed on one of the first moving pulley and the second moving pulley.

## Description

### [Technical Field]

The present disclosure relates to a charger.

### [Background Art]

A charger is a device used to charge a battery.

An example of a charger may be an electric vehicle charger that charges a vehicle such as an electric vehicle, and electric energy is supplied to the battery of the electric vehicle by connecting the charging connector provided at the end of the charging cable to the connection inlet installed in the electric vehicle.

The charger comprises a power module connected to a charging cable and a charger body that forms a space for accommodating the power module, and in order to use the charging cable, the wound charging cable is unwound and pulled out, and then used.

Korean Patent Publication No. 10-2010-0108592 A (October 7, 2020, published) discloses a charging station comprising a pulley that assists in withdrawing or retrieving a charging cable, a main looping pulley, a lower pulley positioned within a guide channel and positioned to receive gravity from beneath the main looping pulley, and an additional pulley attached to the lower pulley.

### [Disclosure]

### [Technical Problem]

The present embodiment provides a charger that is easy to service or assemble.

### [Technical Solution]

A charger according to the present embodiment may comprise a cover having a space formed in the cover; a first pulley guide and a second pulley guide disposed in the cover; a first moving pulley guided by the first pulley guide and moved by a charging cable; a second moving pulley guided by the second pulley guide and moved by the charging cable; and a damper installed on one of the first moving pulley and the second moving pulley.

The cover may be disposed next to a charger body.

One example of the cover may be a disposed on a upper surface of a base disposed at the lower portion of a charger body.

The other example of the cover may be fastened to a bracket installed on a charger body.

An outlet through which the charging cable is drawn out of the cover may be formed on the cover,
The damper may be installed on a moving pulley farther from the outlet among the first moving pulley and the second moving pulley.

The charger may further comprise a connector connected to each of the first moving pulley and the second moving pulley and causing the first moving pulley and the second moving pulley to move in opposite directions.

A length of the connector may be reduced when the first moving pulley and the second moving pulley approach each other, and the length of the connector may be increased when the first moving pulley and the second moving pulley move away from each other.

The connector may comprise a cylinder disposed in the cover; a first rod disposed to advance and retreat in a longitudinal direction of the cylinder and connected to the first moving pulley; and a second rod disposed to advance and retreat in the longitudinal direction of the cylinder and connected to the second moving pulley.

The cylinder may be rotatably disposed on the cover.

The cylinder may be filled with a gas.

The connector may comprise a spring having a first connecting portion formed on one side of the connector and connected to the first moving pulley and a second connecting portion formed on the other side of the connector and connected to the second moving pulley.

The charger may further comprise a gas spring connected to a moving pulley closer to the exit among the first moving pulley and the second moving pulley.

At least one of the first moving pulley and the second moving pulley may comprise: a roller; a bracket on which the roller is rotatably installed; and a stopper attached to the bracket and spaced apart from the roller,

The charging cable may pass through a gap between the stopper and the roller.

One example of the stopper may comprise: a sub-body attached to the bracket; and a sub-roller rotatably supported on the sub-body.

A diameter of the sub-roller may be smaller than a diameter of the roller.

The other example of the stopper may comprise: a fastening body attached to the bracket; and a protruding body protruding from the fastening body and spaced apart from the roller.

### [Advantageous Effect]

According to the present embodiment, the simple structure of the first pulley guide, the second pulley guide, the first moving pulley, and the second moving pulley and the charging cable can be easily managed at low cost, and the service and assembly of the charging cable or the first moving pulley or the second moving pulley are easy.

In addition, the damper can limit the rapid elevation of the first moving pulley and the second moving pulley, and can minimize damage or breakage that may occur when the first moving pulley and the second moving pulley are rapidly elevated.

In addition, the connector can guide the first moving pulley and the second moving pulley to be restored to the restoration position, so that the charging cable can be reliably restored.

In addition, the gas spring can limit the rapid elevation of the second moving roller, so that a safety accident that may occur when the second moving roller is suddenly dropped can be minimized.

In addition, the stoppers of the first moving pulley and the second moving pulley are detachably mounted on the bracket, so that the charging cable can be easily installed.

### [Description of Drawings]

FIG. 1 is a perspective view illustrating an example of a charger according to the present embodiment,
FIG. 2 is a front view illustrating an example of a cover according to the present embodiment,
FIG. 3 is a side view illustrating the inside of a cable management according to the present embodiment,
FIG. 4 is a cross-sectional view illustrating a moving roller and a damper according to the present embodiment,
FIG. 5 is a perspective view illustrating another example of a charger according to the present embodiment,
FIG. 6 is a front view illustrating another example of a charger according to the present embodiment,
FIG. 7 is a plan view illustrating another example of a charger according to the present embodiment,
FIG. 8 is a side view illustrating the other example of a charger according to the present embodiment.
FIG. 9 is a perspective view illustrating another example of a moving pulley according to the present embodiment,
FIG. 10 is a perspective view illustrating another example of a moving pulley according to the present embodiment.

### [Best Mode]

Hereinafter, specific embodiments of the present invention will be described in detail with reference to the drawings.

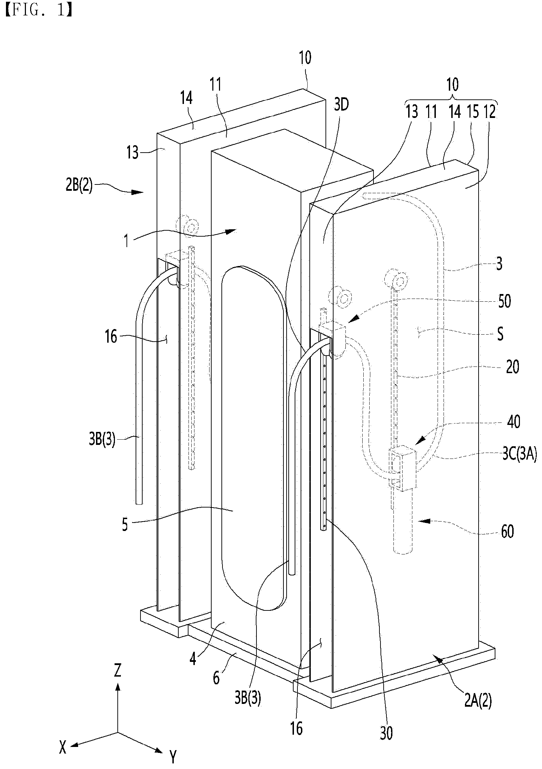

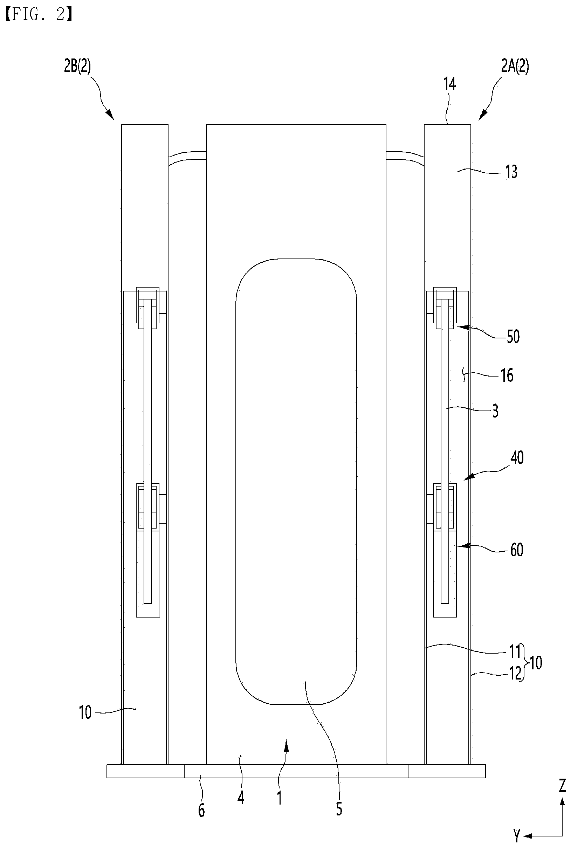

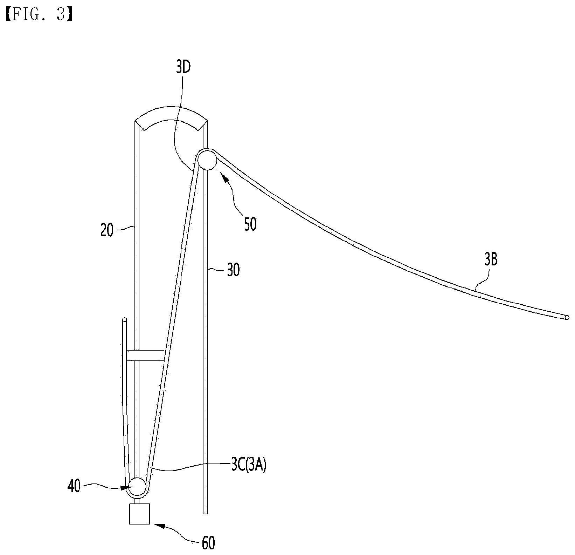

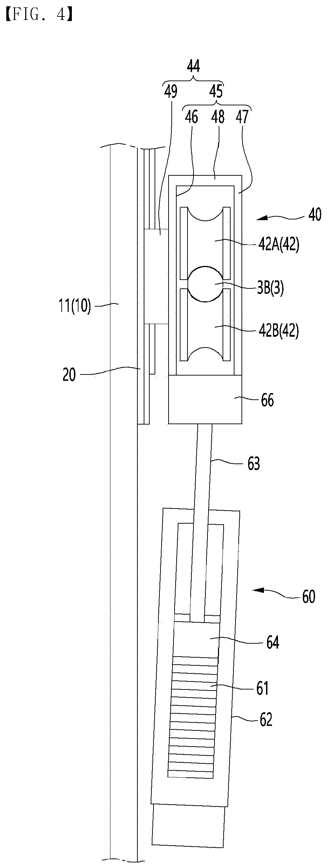

FIG. 1 is a perspective view illustrating an example of a charger according to the present embodiment, FIG. 2 is a front view illustrating an example of a cover according to the present embodiment, FIG. 3 is a side view illustrating the inside of a cable management according to the present embodiment, and FIG. 4 is a cross-sectional view illustrating a moving roller and a damper according to the present embodiment.

The charger may comprise a charger body 1 and a cable management 2.

A charging cable 3 may be connected to the charger body 1. A plurality of charging cables 3 may be connected to the charger body 1, and the plurality of charging cables 3 may be used independently.

The charger body 1 may comprise a charger body 4 that forms an exterior and has an inner space formed therein, and a power module accommodated in the inner space.

One end of the charging cable 3 may be connected to the power module, and a connector (charging gun or plug) connected to a vehicle such as an electric vehicle may be disposed at the other end of the charging cable 1.

An outlet through which the charging cable 3 passes may be formed on the side surface or rear surface of the charger body 1. A plurality of outlets may be formed. The plurality of outlets may comprise a left outlet formed on the left surface of the charger body 1, and a right outlet formed on the right surface of the charger body 1.

A display 5 that may display charging information may be placed on the front surface of the charger body 1.

A base 6 may be disposed on the lower portion of the charger body 1.

The cross-sectional area of the base 6 may be larger than the cross-sectional area of the charger body 1.

The cable management 2 may be disposed on the outside of the charger body 1.

The cable management 2 may be disposed on other than the front surface of the charger body 1, and may be disposed on the rear surface or side surface of the charger body 1.

One example of the cable management 2 may be disposed away from the rear surface or side surface of the charger body 1. The other example of the cable management 2 may be disposed in close contact with the rear surface or side surface of the charger body 1.

An outlet 16 through which a charging cable 3 passes may be formed in the cable management 2. If the cable management 2 is disposed next to the charger body 1 and the outlet 16 is formed at the front surface of the cable management 2, the overall length of the charging cable 3 may be minimized, and hereinafter, the cable management 2 is described as being disposed next to the charger body 1.

The cable management 2 may be disposed on the left and right sides of the charger body 1, respectively.

The charger may comprise a left cable management 2A disposed on the left side of the charger body 1 and a right cable management 2B disposed on the right side of the charger body 1.

The charging cable extended to the left from the charger body 1 may be managed by the left cable management 2A. The charging cable extended to the right from the charger body 1 may be managed by the right cable management 2B.

The left cable management 2A and the right cable management 2B may have a structure that is symmetrical from left to right, and the common configuration of the left cable management 2A and the right cable management 2B will be described below as cable management 2.

The cable management 2 may comprise a cover 10 having a space S formed in the cover; a first pulley guide 20 and a second pulley guide 30 disposed in the cover 10; a first moving pulley 40 guided by the first pulley guide 20 and moved by the charging cable 3; and a second moving pulley 50 guided by the second pulley guide 30 and moved by the charging cable 3.

The cover 10 may be disposed next to the charger body 1. The cover 10 may have an overall rectangular solid shape. The cover 10 may be formed such that the length in the up and down direction Z is longer than the length in the front and rear direction X. The cover 10 may be formed so that the length (thickness) in the left and right direction Y is shorter than the length in the front and rear direction X.

As shown in Fig. 1, the cover 10 may comprise an inner plate 11 facing the side surface of the charger body 1, an outer plate 12 spaced apart from the inner plate 11 in the left and right direction Y, a front plate 13 connecting the front end of the inner plate 11 and the front end of the outer plate 11, and an upper plate 14 connecting the upper end of the inner plate 11 and the upper end of the outer plate 11.

The cover 10 may further comprise a rear plate 15 connecting the rear end of the inner plate 11 and the rear end of the outer plate 11. The cover 10 may further comprise a lower plate (not shown) connecting the lower end of the inner plate 11 and the lower end of the outer plate 11.

The cover 10 may be disposed on the upper surface of the base 6 disposed at the lower portion of the charger body 1.

The cover 10 may be disposed on the base 6 so as to be spaced apart from the side surface of the charger body 1.

The inner plate 11 of the cover 10 may be spaced apart from the side surface of the charger body 1, and a gap may be formed between the cover 10 and the charger body 1.

The cable management 2 may be a tower management parallel to the charger body 1.

When servicing the cable management 2, the worker may separate the cable management 2 from the base 5, and the service of the cable management 2 may be easy.

The cover 10 may be formed with an outlet 16 through which the charging cable 3 is drawn out of the cover 10.

The outlet 16 may be formed on the front plate 13 of the cover 10.

The outlet 16 may be formed in front of the movement path of the second moving pulley 50.

The outlet 16 may be formed to be open in the front plate 13 of the cover 10 in the front and rear direction X. The outlet 16 may be formed to be long in the up and down direction Z on the front plate 13 of the cover 10.

The first pulley guide 20 and the second pulley guide 30 may have the same structure.

The first pulley guide 20 may be spaced apart from the second pulley guide 30 in the front and rear direction X.

The first pulley guide 20 may be disposed to be long in the up and down direction Z on the cover 10.

The first pulley guide 20 may be disposed on the inner plate 11 facing the side surface of the charger body 1 among the inner plate 11 and the outer plate 12 of the cover 10.

The second pulley guide 30 may be disposed lengthwise in the up and down direction Z on the cover 10.

The first pulley guide 20 may be disposed on the inner plate 11 facing the side surface of the charger body 1 among the inner plate 11 and the outer plate 12 of the cover 10.

At least one of the first moving pulley 40 and the second moving pulley 50 may comprise a roller 42 and a bracket 44, as shown in FIG. 4.

The first moving pulley 40 and the second moving pulley 50 may have the same structure. Each of the first moving pulley 40 and the second moving pulley 50 may comprise a roller 42 and a bracket 44.

A plurality of rollers 42 may be provided on the bracket 44. The plurality of rollers 42 may be spaced apart from each other.

The roller 42 may comprise an upper roller 42A and a lower roller 42B spaced apart from the upper roller 42A in the up and down direction Z.

A gap may be formed between the upper roller 42A and the lower roller 42B to accommodate a portion of the charging cable 3.

The charging cable 3 may pass between the upper roller 42A and the lower roller 42B. A portion of the charging cable 3 may be located in the gap.

The bracket 44 may comprise a roller supporter 45 that rotatably supports the roller 42.

The roller supporter 45 may have a three-dimensional shape. The roller supporter 45 may comprise a pair of side bodies 46 and 47 that support the rotational axis of the roller 42, and a connecting body 48 that connects the pair of side bodies 46 and 47.

The bracket 44 may further comprise a sliding body 49 that is guided up and down by the first pulley guide 20 or the second pulley guide 30.

The sliding body 49 may be fastened to one of the pair of side bodies 46 and 47.

The sliding body 49 of the first moving roller 40 may be guided up and down by the first roller guide 20.

The sliding body 49 of the second moving puller 50 may be guided up and down by the second roller guide 30.

One of the first moving roller 40 and the second moving puller 50 may be a front moving roller closer to the front plate 13 of the cover 10, and the other of the first moving roller 40 and the second moving puller 50 may be a rear moving roller closer to the rear plate 15 of the cover 10.

The charging cable 3 may comprise an inner cable 3A accommodated inside the cover 10, and an outer cable 3B extended from the inner cable 3A and positioned outside the outlet 16.

The charging cable 3 may comprise a first bending cable 3C bent into a U shape by the first moving pulley 40, and a second bending cable 3D extended from the first inner cable 3C and bent into a ∩ shape by the weight of the second moving pulley 50 and the outer cable 3B.

The inner cable 3A may comprise all of the first bending cable 3C and a portion of the second bending cable 3D.

The outer cable 3B may comprise a portion of the second bending cable 3D positioned outside the outlet 16.

The bracket 44 of the first moving pulley 40 may be connected to a first wire mechanism having a wire that may be restored to a restoration position (initial position) of the first moving pulley 40.

The first wire mechanism may comprise a pulley that guides a wire disposed on the upper side of the first moving pulley 40. The first wire mechanism may comprise a retractor or a spring balancer that pulls the wire.

The bracket 44 of the second moving pulley 50 may be connected to a second wire mechanism having a wire that may be restored to a restoration position (initial position) of the second moving pulley 50.

The second wire mechanism may comprise a pulley that is disposed on the upper side of the second moving pulley 50 and guides the wire. The second wire mechanism may comprise a retractor or a spring balancer that pulls the wire.

The charger may comprise a damper 60.

The damper 60 may be installed on either the first moving pulley 40 or the second moving pulley 50.

The damper 60 may be installed on the moving pulley 40 that is farther from the exit 16 among the first moving pulley 40 and the second moving pulley 50. The damper 60 may be disposed on the rear moving roller.

An example of the damper 60 may be a spring damper having a spring 61 built in, as shown in FIG. 4. The damper 60 may comprise a cylinder 62 in which a space in which the spring 61 is built in is formed, and a rod 63 that is disposed to be lifted and lowered in the cylinder 62 and supported by the spring 61.

An example of the damper 60 may comprise a cylinder 62 mounted on a cover 10.

An example of a damper 60 is that one end 64 of a rod 63 may be accommodated in a cylinder 62 and connected to a spring 61. An example of a damper 60 is that the other end 66 of the rod 62 may be positioned outside the cylinder 62 and connected to a bracket 44.

An example of a damper 60 is that the rod 62 may be connected to a bracket 44 of a rear moving roller, the damper 60 may limit a sudden rise of the bracket 44, and the spring 61 may absorb a shock that may occur when the bracket 44 is suddenly lowered.

Another example of a damper 60 may comprise a cylinder 62 mounted on a bracket 44 of a rear moving roller.

The other example of the damper 60 is that one end 64 of the rod 63 may be accommodated in the cylinder 62 and connected to the spring 61. The other example of the damper 60 is that the other end 66 of the rod 62 may be located outside the cylinder 62 and may be in contact with or separated from the cover 10.

The other example of the damper 60 is that the damper 60 may limit the rapid lowering of the bracket 44, and the spring 61 of the damper 60 may absorb the shock that may occur when the bracket 44 is rapidly lowered.

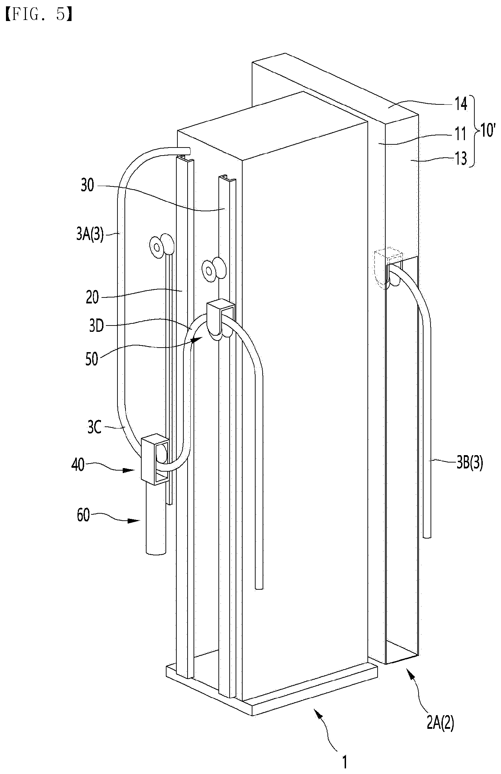

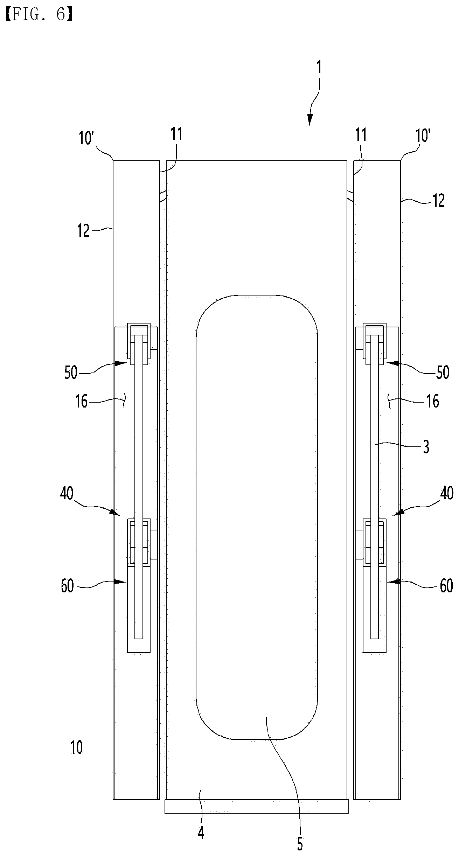

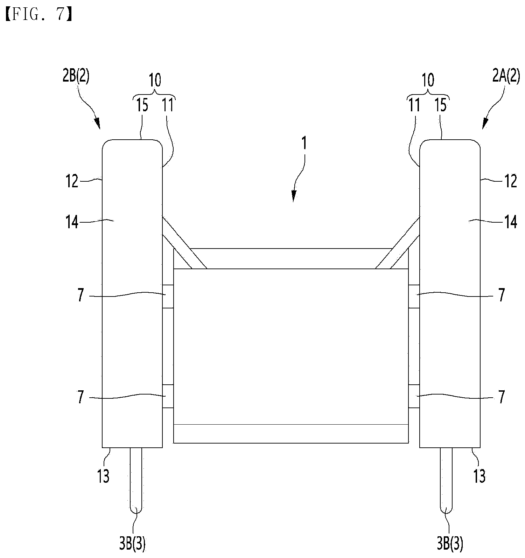

FIG. 5 is a perspective view illustrating another example of a charger according to the present embodiment, FIG. 6 is a front view illustrating another example of a charger according to the present embodiment, and FIG. 7 is a plan view illustrating another example of a charger according to the present embodiment.

The cover 10' may be fastened to the bracket 7 installed on the charger body 1.

The bracket 7 may be disposed on the side surface of the charger body 1.

The cover 10' may be fastened to the bracket 7, and the cable management 2 may be integrated with the charger body 1. The load of the cable management 2 may be applied to the charger body 1.

The cover 10' may further comprise, like the cover 10 of the charger, an inner plate 11, an outer plate 12 spaced apart from the inner plate 11 in the left and right direction Y, a front plate 13 connecting the front end of the inner plate 11 and the front end of the outer plate 11, a upper plate 14 connecting the upper end of the inner plate 11 and the upper end of the outer plate 11, and a rear plate 15 connecting the rear end of the inner plate 11 and the rear end of the outer plate 11.

The inner plate 11 of the cover 10' may be mounted on the 16 7 with a fastening member such as a screw or a hanging member such as a hook.

When servicing the cable management 2, the worker may detach the cable management 2 from the bracket 7, and the service of the cable management 2 may be easy.

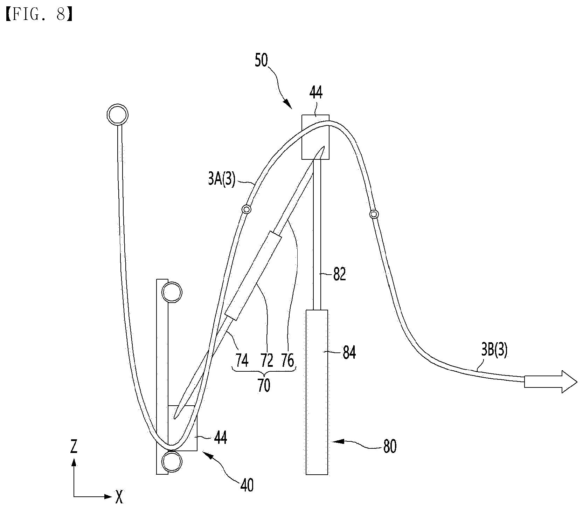

FIG. 8 is a side view illustrating the other example of a charger according to the present embodiment.

The other example of a charger may comprise a connector 70.

The connector 70 may be connected to each of the first moving pulley 40 and the second moving pulley 50.

The connector 70 may cause the first moving pulley 40 and the second moving pulley 50 to move in opposite directions.

The connector 70 may cause the first moving pulley 40 and the second moving pulley 50 to move in opposite directions. The connector 70 may cause the other of the first moving pulley 40 and the second moving pulley 50 to move down when one of the first moving pulley 40 and the second moving pulley 50 moves up. The connector 70 may cause the other of the first moving pulley 40 and the second moving pulley 50 to move up when one of the first moving pulley 40 and the second moving pulley 50 moves down.

A length of the connector 70 may be shortened in length when the first moving pulley 40 and the second moving pulley 50 come close, and may be lengthened when the first moving pulley 40 and the second moving pulley 50 move farther apart.

The connector 70 may push each of the first moving pulley 40 and the second moving pulley 50 so that each of the first moving pulley 40 and the second moving pulley 50 is positioned in a restored position.

The connector 70 may push each of the first moving pulley 40 and the second moving pulley 50 in opposite directions, and may help restore the first moving pulley 40 and the second moving pulley 50, and may reliably restore the charging cable 3.

For example, the restoration position of the first moving pulley 40 may be the lower limit position of the first moving pulley 40, and the restoration position of the second moving pulley 500 may be the upper limit position of the second moving pulley 50, and if no external force (pulling force) is applied to the charging cable 2 from the outside, the connector 70 may push the first moving pulley 40 to the restoration position (lower limit position) and push the second moving pulley 50 to the restoration position (upper limit position).

An example of the connector 70 may comprise a cylinder 72 disposed on the cover 10; a first rod 74 disposed to advance and retreat in the longitudinal direction of the cylinder 72 and connected to the first moving pulley 40, and a second rod 76 disposed to advance and retreat in the longitudinal direction of the cylinder 72 and connected to the second moving pulley 50.

The cylinder 72 may be rotatably disposed on the cover 10.

The inside of the cylinder 72 may be filled with gas.

The first rod 74 may be rotatably connected to the bracket 44 of the first moving pulley 40.

The second rod 76 may be rotatably connected to the bracket 44 of the second moving pulley 50.

When the first moving pulley 40 and the second moving pulley 50 approach each other, the first rod 74 and the second rod 76 may be retracted toward the cylinder 72, and when the first moving pulley 40 and the second moving pulley 50 move away, the first rod 74 and the second rod 76 may be advanced toward the outside of the cylinder 72.

If the charging cable 3 is pulled by an external force, the first moving roller 40 may be raised, the second moving roller 50 may be lowered, the first rod 74 may be inserted into the cylinder 72 by the first moving roller 40 and may compress gas and the second rod 76 may be inserted into the cylinder 72 by the second moving roller 50 and may compress gas.

An example of the connector 70 may push the first rod 74 and the second rod 76 outwardly by the restoring force of the gas. If the external force (pulling force) applied to the charging cable 3 is removed, the first rod 74 may reliably push the first moving pulley 40 to the restoring position (lower limit position), and the second rod 76 may reliably push the second moving pulley 50 to the restoring position (upper limit position).

Another example of the connector 70 may comprise a spring. A first connecting portion connected to the first moving pulley 40 may be formed on one side of the spring and a second connecting portion connected to the second moving pulley 50 may be formed on other side of the spring.

If an external force (pulling force) is applied to the charging cable 3, and the first moving roller 40 and the second moving roller 50 come close, the spring may be compressed and may elastically support the first moving roller 40 and the second moving roller 50.

If the external force pulling (force applied) to the charging cable 3 is removed, the spring may reliably push the first moving pulley 40 to the restoration position (lower limit position), and the second rod 76 may reliably push the second moving pulley 50 to the restoration position (upper limit position).

The other example of a connector may comprise a shaft.

A first connecting portion connected to the first moving pulley 40 may be formed on one side of the shaft and a second connecting portion connected to the second moving pulley 40 may be formed other side to the shaft.
he charger may further comprise a gas spring 80.

The gas spring 80 may be connected to a moving pulley closer to the outlet 16 among the first moving pulley 40 and the second moving pulley 50.

The gas spring 80 may be connected to a front pulley located in the front among the first moving pulley 40 and the second moving pulley 50, and may be connected to the second moving pulley 50.

The gas spring 80 may be connected to a bracket 44 of the second moving pulley 50.

The gas spring 80 may limit rapid elevation of the second moving pulley 50 at the lower of the second moving pulley 50 and may assist in the restoration of the second moving pulley 80.

The gas spring 80 may comprise a rod 82 connected to the bracket 44 of the second moving pulley 50 and a cylinder 84 through which the rod 82 is raised and lowered, and gas may be accommodated inside the cylinder 84.

The cylinder 84 may be disposed in the cover 10.

The rod 82 may be raised and lowered in the up-and-down direction Z.

The gas spring 80 may limit a rapid lowering of the front moving pulley.

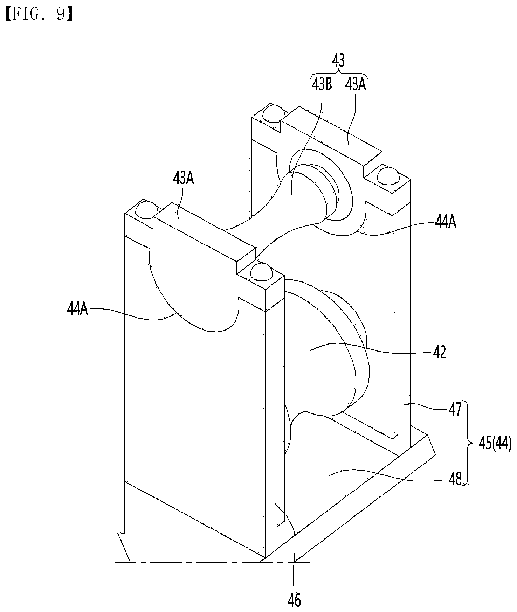

FIG. 9 is a perspective view illustrating another example of a moving pulley according to the present embodiment.

At least one example of the first moving pulley 40 and the second moving pulley 50 may comprise a roller 42, a stopper 43, and a bracket 44. The first moving pulley 40 and the second moving pulley 50 may have the same structure, and hereinafter are referred to as moving pulleys.

The moving pulley may be raised or lowered by the charging cable 3.

The roller 42 may be rotatably disposed on the bracket 44.

A single roller 42 may be rotatably disposed on the bracket 44.

The stopper 43 may be attached to the bracket 44 so as to be spaced apart from the roller 42.

The charging cable 3 may pass through the gap between the stopper 43 and the roller 42.

The stopper 43 may comprise a sub-body 43A that is fastened to the bracket 44 and a sub-roller 43B that is rotatably supported by the sub-body 44A.

The sub-body 43A may be inserted into a stopper mounting groove 44A formed in the bracket 44 and may be accommodated in the stopper mounting groove 44A.

The sub-body 43A may be fastened to the bracket 44 by a fastening member such as a screw.

The sub-roller 43B may be spaced apart from the roller 42 in the up and down direction Z.

The diameter of the sub-roller 43B may be smaller than the diameter of the roller 42.

With the stopper 43 separated from the bracket 44, the charging cable 3 may be placed on the roller 42 of the moving pulley, and with the charging cable 3 placed on the roller 42, the stopper 43 may be fastened to the bracket 44.

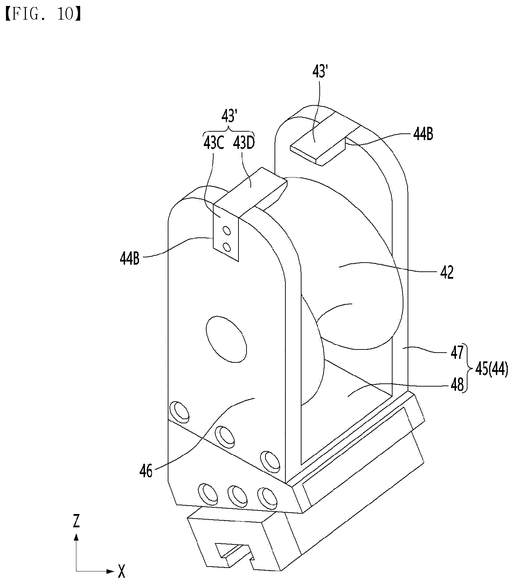

FIG. 10 is a perspective view illustrating another example of a moving pulley according to the present embodiment.

Another example of a moving pulley may comprise a roller 42, a stopper 43', and a bracket 44.

The roller 42 and the bracket 44 may be the same as or similar to the moving pulley illustrated in FIG. 9, and to avoid duplicate description, the same reference numerals are used, and detailed descriptions thereof are omitted.

The stopper 43' may be a stopper pin mounted on the bracket 44.

The stopper 43' may be mounted by being fitted onto the bracket 44. The stopper 43' may be mounted on the bracket 44 using a fastening member such as a screw.

A pair of stoppers 43' may be installed on the bracket 44. The pair of stoppers 43' may be spaced apart from each other. The pair of stoppers 43' may be spaced apart in the horizontal direction. The distance between the pair of stoppers 43' may be smaller than the diameter of the charging cable 3.

The stopper 43' may comprise a fastening body 43C fastened to the bracket 44 and a protruding body 43D protruding from the fastening body 43C and spaced apart from the roller 42.

The fastening body 43C may be inserted into a stopper mounting groove 44B formed in the bracket 44 and may be accommodated in the stopper mounting groove 44B.

The fastening body 43C may be fastened to the bracket 44 by a fastening member such as a screw.

The protruding body 43D may be bent orthogonally to the fastening body 43C.

The protruding body 43D may be spaced apart from the roller 42 in the up and down direction Z.

The above description is merely an illustrative explanation of the technical idea of the present disclosure, and various modifications and variations will be possible to those skilled in the art without departing from the essential characteristics of the present disclosure.

Accordingly, the embodiments disclosed in the present disclosure are not intended to limit the technical idea of the present disclosure, but rather to explain it, and the scope of the technical idea of the present disclosure is not limited by these embodiments.

The scope of protection of the present disclosure should be interpreted in accordance with the claims below, and all technical ideas within the equivalent scope should be construed as being comprised in the scope of rights of the present disclosure.

## Claims

1. A charger comprising;
a cover having a space formed in the cover;
a first pulley guide and a second pulley guide disposed in the cover;
a first moving pulley guided by the first pulley guide and moved by a charging cable;
a second moving pulley guided by the second pulley guide and moved by the charging cable; and
a damper installed on one of the first moving pulley and the second moving pulley.

2. The charger of claim 1,
wherein the cover is disposed next to a charger body.

3. The charger of claim 1,
wherein the cover is a disposed on a upper surface of a base disposed at the lower portion of a charger body.

4. The charger of claim 1,
wherein the cover is fastened to a bracket installed on a charger body.

5. The charger of claim 1,
wherein an outlet through which the charging cable is drawn out of the cover is formed on the cover,
and the damper is installed on a moving pulley farther from the outlet among the first moving pulley and the second moving pulley.

6. The charger of claim 1, further comprising;
a connector connected to each of the first moving pulley and the second moving pulley and causing the first moving pulley and the second moving pulley to move in opposite directions.

7. The charger of claim 6,
wherein a length of the connector is reduced when the first moving pulley and the second moving pulley approach each other,
and the length of the connector is increased when the first moving pulley and the second moving pulley move away from each other.

8. The charger of claim 6,
wherein the connector comprises
a cylinder disposed in the cover;
a first rod disposed to advance and retreat in a longitudinal direction of the cylinder and connected to the first moving pulley; and
a second rod disposed to advance and retreat in the longitudinal direction of the cylinder and connected to the second moving pulley.

9. The charger of claim 8,
wherein the cylinder is rotatably disposed on the cover.

10. The charger of claim 8,
wherein the cylinder is a gas cylinder having gas filled in the gas cylinder.

11. The charger of claim 6,
wherein the connector comprises
a spring having a first connecting portion formed on one side of the connector and connected to the first moving pulley and
a second connecting portion formed on the other side of the connector and connected to the second moving pulley.

12. The charger of claim 1, further comprising;
wherein an outlet through which the charging cable is drawn out of the cover is formed on the cover,
the charger further comprises
a gas spring connected to a moving pulley closer to the exit among the first moving pulley and the second moving pulley.

13. The charger of claim 1,
wherein at least one of the first moving pulley and the second moving pulley comprises:
a roller;
a bracket on which the roller is rotatably installed; and
a stopper attached to the bracket and spaced apart from the roller,
wherein the charging cable passes through a gap between the stopper and the roller.

14. The charger of claim 13,
wherein the stopper comprises:
a sub-body attached to the bracket; and
a sub-roller rotatably supported on the sub-body.

15. The charger of claim 14,
wherein a diameter of the sub-roller is smaller than a diameter of the roller.

16. The charger of claim 13,
wherein the stopper comprises:
a fastening body attached to the bracket; and
a protruding body protruding from the fastening body and spaced apart from the roller.
